# EUROPÄISCHE PATENTSCHRIFT

(11) **EP 1 000 891 B1**
(45) Veröffentlichungstag und Bekanntmachung des Hinweises auf die Patenterteilung: **12.01.2005**
(21) Anmeldenummer: 99120993.3
(22) Anmeldetag: 04.11.1999
(51) Int. Cl.: B65H 7/00, G01B 7/06, B65H 39/04

(54) **Vorrichtung zur Dickenmessung von flachen Produkten**
Device for measuring the thickness of flat products
Dispositif pour mesurer l'épaisseur de produits plats

(30) Priorität: 09.11.1998 US 188239
(43) Veröffentlichungstag der Anmeldung: 17.05.2000
(73) Patentinhaber: Goss International Americas, Inc., Dover, NH 03820 (US)
(72) Erfinder: Conner, Charles Jeffrey, Beavercreek, Ohio 45430 (US); Farr, Alan Scott, 45242 Huber Heights, Ohio (US); Schlough, James Richard, Troy 45373 Ohio (US)
(74) Vertreter: Domenego, Bertrand

(56) Entgegenhaltungen:
- US-A- 3 825 247
- US-A- 4 127 266
- US-A- 5 127 640
- US-A- 5 213 318

## Beschreibung

Die vorliegende Erfindung betrifft eine Vorrichtung zur Dickenmessung flacher Produkte wie z. B. Bogen oder Signaturen und insbesondere eine Vorrichtung zur Dickenmessung von Bogen oder Signaturen, die von einer Zuführeinrichtung von einem Signaturenstapel einer Transportvorrichtung, z. B. einem Taschenförderband, zugeführt werden, um eine Fehlfunktion der Zuführeinrichtung zu erfassen.

In der Buch-, Broschüren-, Zeitschriftenproduktion und ähnlichen Bereichen werden Zusammentragsysteme eingesetzt, die in der Regel eine Transportvorrichtung umfassen, auf der einzelne Signaturen zur nachfolgenden Bearbeitung, z. B. zum Binden, zu einem Buchblock zusammengetragen werden. Entlang der Transportvorrichtung sind in der Regel mehrere Zuführstationen mit jeweils einer Zuführeinrichtung angeordnet, welche jeweils eine einzelne Signatur von einem Signaturenstapel der Transportvorrichtung zuführt, so daß auf der Transportvorrichtung nach und nach ein Buchblock gebildet wird. Die Zuführeinrichtungen umfassen in der Regel Dickenmesser zum Erfassen von Fehlfunktionen der Zuführeinrichtung, wenn z. B. mehr oder weniger Bogen als vorgesehen von dem Stapel abgenommen werden.

Zur Lösung dieses Problems wurden verschiedene Versuche unternommen, Zusammentragsysteme mit Vorrichtungen zum Messen der Dicke einer von einem Signaturenstapel einer Transportvorrichtung zugeführten Signatur auszustatten. Derartige Dickenmesser umfassen in der Regel ein mechanisches Meßinstrument mit einer Skala zum Messen der Dicke der von der Zuführeinrichtung an die Transportvorrichtung übergebenen Bogen. Ein derartiger Dickenmesser ist z. B. aus US 4,471,954 bekannt. In dieser Schrift ist eine Transportvorrichtung in Form eines Taschenförderbands mit einer Vielzahl von Bogeneinlegefächem beschrieben. Den Bogeneinlegefächern ist jeweils eine Bogenauswurfvorrichtung zugeordnet, welche einzelne Bogen aus dem jeweiligen Bogeneinlegefach einer gemeinsamen Transportbahn zuführt. Zwischen jedem der Bogeneinlegefächer und der Transportbahn wird eine Bogendurchlaufkontrolle durchgeführt, indem ein photoelektrischer Detektor ein Lichtdurchlässigkeits- oder Lichtreflexionssignal erzeugt, welches mit einem einem einzelnen Bogen entsprechenden gespeicherten Durchschnittswert verglichen wird.

Eine weitere Vorrichtung um Messen der Dicke von Bogen, welche von einer Zuführstation einem Taschenförderband zugeführt werden, ist aus US 5,213,318 bekannt. Die in dieser Schrift beschriebene Vorrichtung umfaßt eine Vielzahl von Zuführstationen, an denen die Fördertaschen vorbeibewegt werden können. Den Fördertaschen ist jeweils eine ortsfeste erste Walze und eine bewegbare zweite Walze zugeordnet, die einander kontaktieren, wenn zwischen ihnen kein Bogen hindurchläuft. Bewegt sich ein flaches Produkt zwischen den Walzen hindurch, so wird die zweite Walze ausgelenkt, wobei die Länge des Auslenkungswegs der Dicke des hindurchbewegten Produkts entspricht. Zur Feststellung der Dicke des Produkts wird die Länge des Auslenkungswegs der zweiten Walze gemessen. Dazu ist die zweite Walze auf einer bewegbaren Welle angeordnet, an deren einem Ende in einem Zwischenraum zwischen einer Lichtquelle und einem Lichtsensor ein Blech drehbar angeordnet ist. Bei Drehung der Welle ändert sich die Winkelposition des Blechs, so daß das Blech mehr oder weniger von der Lichtquelle ausgestrahltes Licht abfängt. Die abgefangene Lichtmenge entspricht demnach der Auslenkung der Walze.

Dieses Verfahren ist jedoch aufgrund von Schatteneffekten und der begrenzten Auflösung des Lichtsensors nur bedingt exakt. Ferner muß jeder Transporttasche eine eigene Lichtquelle zugeordnet werden.

Es ist eine Aufgabe der vorliegenden Erfindung, die Genauigkeit der Dickenmessung zu erhöhen und eine verbesserte Vorrichtung zur Dickenmessung von flachen Produkten zu schaffen.

Erfindungsgemäß wird diese Aufgabe durch eine Vorrichtung mit den Merkmalen gemäß Anspruch 1 oder Anspruch 3 gelöst.

Gemäß einem Aspekt der vorliegenden Erfindung wird eine Vorrichtung zur Dickenmessung von flachen Produkten wie Bogen oder Signaturen beschrieben, in der die flachen Produkte von einer Zuführeinrichtung von einem Signaturenstapel einer Aufnahmeeinrichtung zugeführt werden. Die Zuführeinrichtung umfaßt eine erste Walze und eine auslenkbare zweite Walze, die einander kontaktieren und einen Walzenspalt bilden, durch den ein flaches Produkt hindurchgeführt werden kann, wobei die erste Walze ausgelenkt wird, wenn ein flaches Produkt den Walzenspalt passiert. Die Vorrichtung umfaßt eine an der ersten Walze angeordnete erste Markierung und eine ortsfest an der Transportvorrichtung angeordnete zweite Markierung. Ferner umfaßt die Vorrichtung mindestens einen von der Transportvorrichtung beabstandeten Annäherungsschalter zur Erfassung mindestens einer der beiden Markierungen.

Die erfindungsgemäßen Lösungen sind vorteilhaft, da die Vorrichtung gemäß der vorliegenden Erfindung bei der Messung der Dicke flacher Produkte eine hohe Genauigkeit gewährleistet. Ferner wird durch die vorliegende Erfindung eine geeignetere Meßgröße als die der Dicke des flachen Produkts entsprechend geringe Auslenkung der Walze geschaffen, indem der Abstand zwischen dem Erscheinen der ersten und der zweiten Markierung gemessen wird.

Die erste und die zweite Markierung können in erfindungsgemäßer Weise an einer bewegbaren Transportvorrichtung angeordnet sein, z. B. an einer bewegbaren Aufnahmevorrichtung, einem sog. Sammler mit Transporttaschen und einem Taschenförderband. Der Annäherungsschalter und eine Zähleinheit können ortsfest und von der bewegbaren Transportvorrichtung beabstandet angeordnet sein. Diese räumliche Trennung der Vorrichtungsteile hat den Vorteil, daß zur Erfassung einer Vielzahl von Aufnahmevorrichtungen oder Sammlern nur ein Annäherungsschalter benötigt wird.

Der erste Annäherungsschalter kann ortsfest in einem Abstand zu der bewegbaren Aufnahmevorrichtung so angeordnet sein, daß er die erste und die zweite Markierung erfassen kann. Erfaßt der Annäherungsschalter die erste Markierung, so beginnt ein Mikrocomputer damit, die von einer Pulserzeugungseinrichtung erzeugten Impulse zu zählen, bis der Annäherungsschalter die zweite Markierung erfaßt und den Zählvorgang stoppt. Da die Position der zweiten Markierung von der Auslenkung der beweglichen Walze abhängt, ist die Anzahl der gezählten Impulse abhängig von der Dicke des flachen Produktes, d. h. die Dicke kann aus der Anzahl der Impulse berechnet werden.

Eine weitere Ausführungsform der vorliegenden Erfindung besteht darin, daß die Vorrichtung zur Dickenmessung eine Vielzahl von Zuführstationen aufweist, welche jeweils einen Stapel Bogenmaterial aufnehmen können. Außerdem ist eine Vielzahl von Aufnahmevorrichtungen mit einer Aufnahmestelle und eine Zuführeinrichtung zum Zuführen von Bogenmaterial von einem Stapel in der Zuführstation zu den Aufnahmestellen vorgesehen. Die Vorrichtung umfaßt ferner Antriebseinrichtungen, welche die Aufnahmevorrichtungen nacheinander an den Zuführstationen vorbeibewegen, und eine Vielzahl von ersten und zweiten Markierungen. Die ersten Markierungen sind jeweils bewegbar und jeweils an den Zuführmitteln angeordnet, während die zweiten Markierungen jeweils ortsfest an den Aufnahmeeinrichtungen angeordnet sind. Ein erster Annäherungsschalter zum Erfassen einer der Vielzahl von ersten und zweiten Markierungen ist ortsfest und in einem Abstand zu den Aufnahmeeinrichtungen angeordnet. In einem Abstand zu den Aufnahmeeinrichtungen sind ferner eine ortsfeste Einrichtung zur Impulserzeugung und ein ortsfester Mikroprozessor angeordnet, der die Impulse der Pulserzeugungseinrichtung und das erste und zweite Sensorsignal überwacht.

Diese und weitere Merkmale der vorliegenden Erfindung sind Gegenstand der nachfolgenden Figuren sowie deren Beschreibungen.

Es zeigen im einzelnen:
- Fig. 1: eine schematische Aufsicht auf eine beispielhafte Zusammentrageinrichtung gemäß der vorliegenden Erfindung;
- Fig. 2: eine schematische Teilansicht einer beispielhaften Vorrichtung zur Dickenmessung gemäß der vorliegenden Erfindung, wenn keine Bogenzufuhr stattfindet;
- Fig. 3: eine schematische Teilansicht einer beispielhaften Vorrichtung zur Dickenmessung gemäß der vorliegenden Erfindung, wenn während eines normalen Zuführvorgangs ein Bogen zwischen einem Walzenpaar hindurchgeführt wird;
- Fig. 4: eine schematische Teilansicht einer beispielhaften Vorrichtung zur Dickenmessung gemäß der vorliegenden Erfindung bei einer Fehlfunktion des Zuführmechanismus.
- Fig. 5: eine schematische Darstellung einer weiteren beispielhaften Ausführungsform der Vorrichtung zur Dickenmessung gemäß der vorliegenden Erfindung; und
- Fig. 6: eine schematische, perspektivische Darstellung einer beispielhaften Vorrichtung zur Dickenmessung einer Zusammentrageinrichtung gemäß der vorliegenden Erfindung.

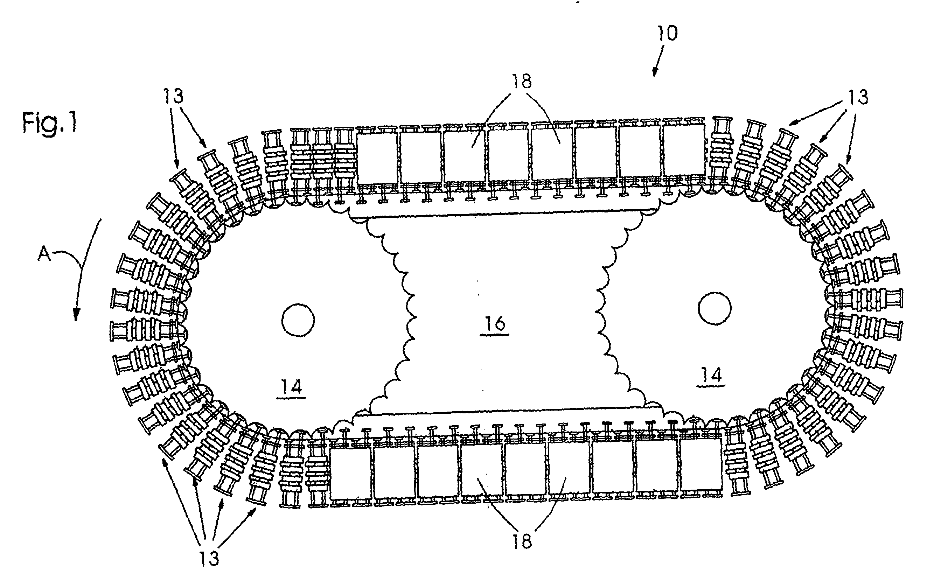

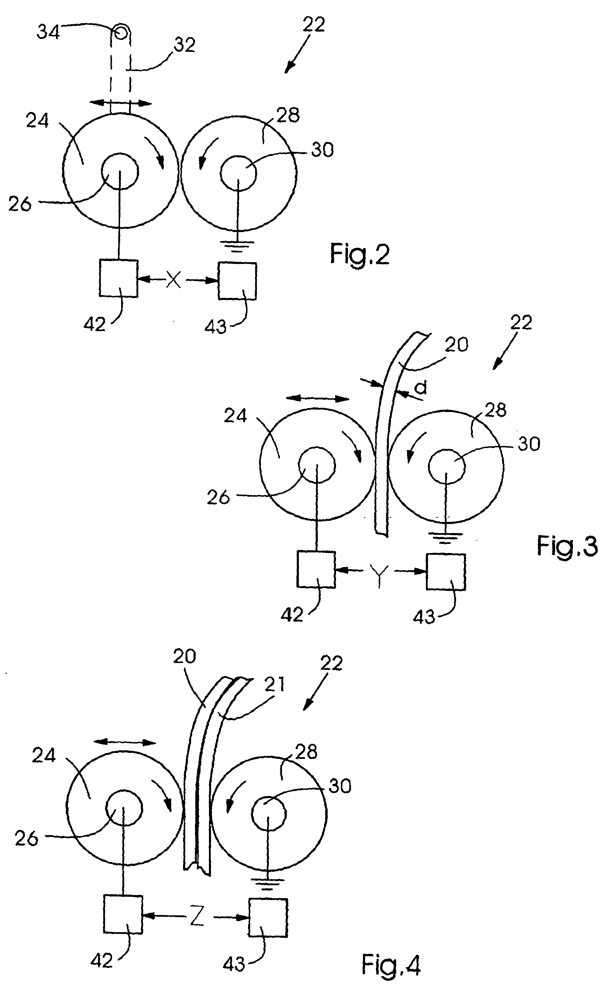

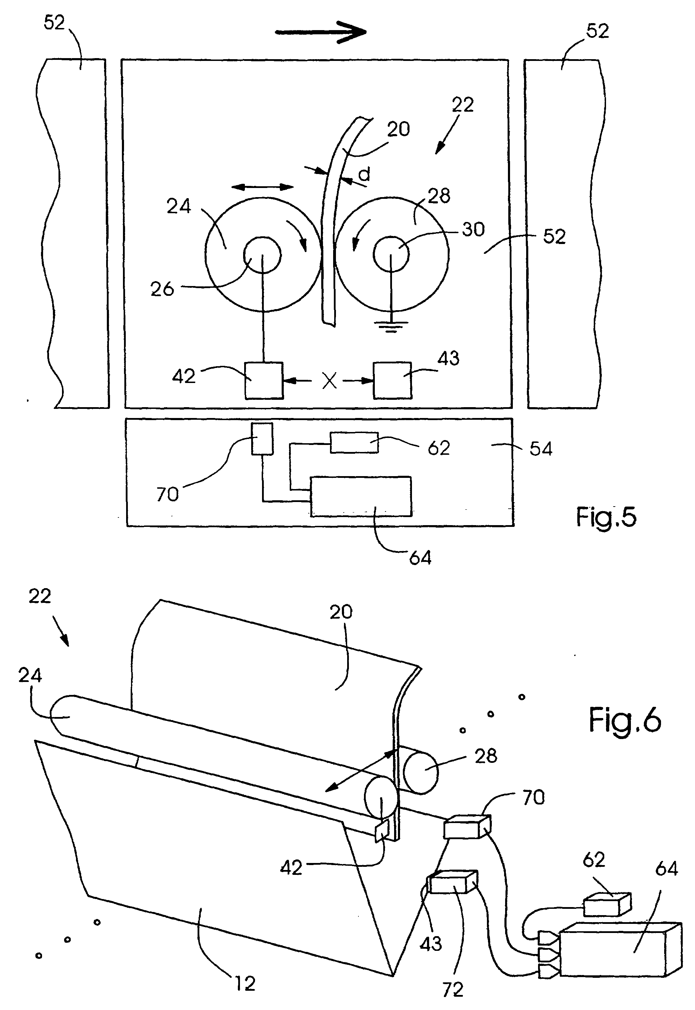

Die in Fig. 1 gezeigte Zusammentrageinrichtung 10 umfaßt eine Vielzahl von Aufnahmeeinrichtungen 13, sogenannten Sammlern, die sich in die durch den Pfeil A angezeigte Richtung entlang einer Förderbahn bewegen. Jede der Aufnahmeeinrichtungen 13 umfaßt eine Aufnahmestelle, z. B. eine Tasche 12 (s. Fig. 6), zur Aufnahme flacher Produkte und eine Zuführvorrichtung 22 (s. Fig. 6), so daß ein Vielzahl von flachen Produkten in einer vorgegebenen Reihenfolge in den Taschen 12 zusammengetragen wird. Die Vielzahl von Aufnahmeeinrichtungen 13 ist in einem endlosen Kreislauf angeordnet und bewegt sich um an einem Hauptgestell 16 befestigte Kettenräder 14. Stapel flacher Produkte befinden sich in den Zuführstationen 18, an denen jeweils ein flaches Produkt des Stapels den Taschen zugeführt wird. Die Zuführstationen 18 können an verschiedenen Stellen entlang des Transportwegs angeordnet sein. Bevorzugt sind mindestens so viele Zuführstationen vorgesehen, wie unterschiedliche Signaturen den Taschen zugeführt werden sollen, es können jedoch auch mehr oder weniger sein. An jeder Zuführstation 18 wird ein einzelnes flaches Produkt, z. B. ein Bogen oder eine Signatur 20 (s. Fig. 3) von dem jeweiligen Stapel flacher Produkte der Aufnahmeeinrichtung 13 zugeführt, die gerade unter der betreffenden Zuführstation 18 hindurchläuft. Eine Fehlfunktion der Zuführeinrichtung tritt z. B. dann auf, wenn entweder keine Signatur (Fehlzufuhr) oder eine falsche Anzahl Signaturen (Doppelzufuhr) der Tasche zugeführt wird.

Beim Auftreten einer Fehl- oder Doppelzufuhr kann das System, welches den Zusammentragvorgang steuert, ein Signal an die nachgeordneten Zuführstationen 18 geben, um eine Zufuhr weiterer Signaturen an die betreffende Aufnahmeinrichtung zu verhindern. Der in dieser Aufnahmeeinrichtung befindliche unvollständige Buchblock wird daraufhin am Ende des Zusammentragvorgangs ausgeschleust. Beim selektiven Zusammentragen, d. h. wenn alle vorhandenen Zuführstationen eingesetzt werden und ein Buchblock durch wahlweises Zuführen von der jeweiligen Zuführstation gebildet wird, wird der betreffende Buchblock entweder neu zusammengetragen oder ein Ersatzbuchblock wird an dessen Stelle in den Produktstrom eingefügt.

Fig. 2 zeigt schematisch eine Seitenansicht der Zuführeinrichtung 22 zum Zuführen eines Bogens oder einer Signatur 20 (s. Fig. 3) von einem Signaturenstapel zu einer Aufnahmetasche. Die Zuführeinrichtung 22 umfaßt eine erste Walze 24 mit einer ersten Achse 26 und eine zweite Walze 28 mit einer zweiten Achse 30. Wie durch den Pfeil angedeutet ist, ist die bewegbare Walze 24 geradlinig auslenkbar, wenn ein flaches Produkt in den Walzenspalt einläuft. Alternativ kann die Walze 24 an einen drehbar auf einer Achse 34 angeordneten und um diese Achse 34 drehbaren Hebelarm 32 gekoppelt sein, wie durch die gestrichelte Linie angedeutet ist. Eine erste Markierung 42 ist an der ersten Walze 24, z. B. an der ersten Achse 26, angebracht. Eine zweite Markierung 43 ist fest an der Aufnahmeeinrichtung 13 so angebracht, daß sie sich während eines Zuführvorgangs bezüglich der ersten Markierung nicht bewegt. Erfolgt kein Zuführvorgang, so sind die Walzen 24 und 28 nah beieinander angeordnet und können aneinander angestellt sein. In diesem Zustand ist die Walze 24 nicht ausgelenkt, d. h. der Abstand zwischen der ersten und zweiten Markierung 42, 43 entspricht der Dicke d=0, was bedeutet, daß kein Produkt zugeführt wird.

Wird eine Signatur 20 von dem Stapel der Aufnahmetasche zugeführt, läuft sie in den Walzenspalt zwischen den Walzen 24 und 28 ein, wie in Fig. 3 schematisch gezeigt ist. Die bewegbare Walze wird geradlinig ausgelenkt oder um die Achse 34 geschwenkt und legt einen Weg zurück, der von der Dicke der Signatur 20 abhängig ist. Demgemäß wird die auf der ersten Achse 26 angeordnete erste Markierung 42 ausgelenkt. Der Abstand zwischen den Markierungen 42 und 43 steigt auf einen Wert y, welcher mit der Dicke eines flachen Produkts 20 korreliert ist.

Bei einer Doppelzufuhr werden z. B. zwei Signaturen 20, 21 von dem Signaturenstapel der Aufnahmetasche zugeführt, wie schematisch in Fig. 4 gezeigt ist. In diesem Fall laufen beide Signaturen 20, 21 durch den Spalt zwischen den Walzen 24, 28. Die bewegbare Walze wird um ein bestimmtes, der Summe der Dicke der ersten Signatur 20 und der Dicke der zweiten Signatur 21 entsprechendes Maß z ausgelenkt. Die Summe der Dicken der beiden Signaturen entspricht in der Regel der zweifachen Dicke d eines einzelnen flachen Produkts 20. Somit ist der Auslenkungsweg der ersten Markierung 42 größer als bei einem korrekten Zuführvorgang.

Demgemäß ist es möglich, die Dicke der Bogen oder Signaturen durch Messung des Abstandes zwischen den Markierungen 42, 43 zu ermitteln, wie im folgenden näher erläutert wird.

In Fig. 5 ist eine Zuführeinrichrung mit einer Vorrichtung zur Dickenmessung gemäß einer Ausführungsform der vorliegenden Erfindung schematisch gezeigt. Die Vorrichtung zur Dickenmessung umfaßt eine Vielzahl von ersten Elementen 52 und ein einzelnes zweites Element 54, wobei die ersten Elemente 52 bezüglich des zweiten Elements 54 beispielsweise in Pfeilrichtung bewegbar sind. Die ersten Elemente 52 sind auf der Transportvorrichtung, insbesondere an den Aufnahmeeinrichtungen 13 der Transportvorrichtung 10 angeordnet. Die ersten Elemente 52 umfassen jeweils eine Zuführvorrichtung 22, eine an der ersten, bewegbaren Walze 24 angeordnete erste Markierung 42, und eine ortsfest angeordnete zweite Markierung 43. Das zweite Element 54 ist ortsfest und von dem ersten Element 52 beabstandet angeordnet und umfaßt einen Annäherungsschalter 70 sowie eine Auswertungseinheit 64 zur Auswertung der von dem Annäherungsschalter 70 erzeugten Signale. Die Auswertungseinheit 64, die auch als Dickenkontrollvorrichtung bezeichnet werden kann, weist vorzugsweise einen Mikrocomputer auf, insbesondere zur Berechnung der Dicke eines Bogens odereiner Signatur. Die Auswertungseinheit 64 ist mit einer Pulserzeugungseinrichtung 62 gekoppelt, die der Bewegung der Transportvorrichtung und insbesondere der ersten Elemente 52 entsprechende Impulse erzeugt. Die Zuführeinrichtung 22 umfaßt eine erste Walze 24 mit einer ersten Achse 26 und eine zweite Walze 28 mit einer zweiten Achse 30. Die erste Walze 24 ist auslenkbar und wird ausgelenkt, wenn ein Bogen oder eine Signatur 20 in den Spalt zwischen der ersten und der zweiten Walze 24, 28 einläuft. Die erste Markierung 42 ist an der ersten Walze 24, beispielsweise auf der durch die erste Walze 24 verlaufenden Achse 26 angeordnet.

Passiert eines der ersten Elemente 52 der Vorrichtung zur Dickenmessung das zweite Element 54, so erfaßt der Annäherungsschalter 70 die fest angeordnete Markierung 43. Daraufhin beginnt die Dickenkontrolleinheit 64, die von einer Pulserzeugungseinrichtung 62 erzeugten Impulse zu zählen, wobei die Pulserzeugungseinrichtung 62 permanent Impulse erzeugt, welche z. B. den von dem ersten Element 52 zurückgelegten Weg anzeigen. Sobald der Annäherungsschalter 70 die bewegbare Bezugsmarkierung 42 erfaßt, wird der Zählvorgang der Dickenkontrolleinheit abgebrochen. Die Anzahl der gezählten Impulse entspricht dem Abstand der beiden Markierungen 42 und 43 voneinander und somit der Dicke des bzw. der zwischen den Walzen 24, 28 hindurchgelaufenen flachen Produkte. Zur Feststellung einer Fehl- oder Doppelzufuhr wird die Anzahl der gezählten Impulse mit einer zuvor gespeicherten, der Dicke eines einzelhen flachen Produkts entsprechenden Vergleichszahl oder einem Toleranzbereich verglichen. Diese Vergleichszahl bzw. dieser Toleranzbereich kann für jede Aufnahmevorrichtung individuell gespeichert werden. Dies kann z. B. durch einen sogenannten Selbstlernzyklus erfolgen, bei dem für jede Aufnahmeeinrichtung die Anzahl der Impulse sowohl ohne durchlaufendes flaches Produkt als auch die normale Produktdicke für den betreffenden Produktionslauf in einer Tabelle gespeichert wird. Die gespeicherten Daten für jede Aufnahmeeinrichtung sollte auch die herstellungsbedingt unterschiedlichen Toleranzbereiche berücksichtigen. Da die Dickenkontrolleinheit, die einen Mikroprozessor umfaßt, auf die gespeicherte Tabelle zugreifen kann, ist ein Vergleich zwischen den während der folgenden Zuführvorgänge erfaßten Meßwerten und den gespeicherten Daten möglich. Ist die gemessene Entfernung doppelt so groß wie der erwartete Auslenkungsweg, so liegt eine Doppelzufuhr vor. Entspricht die gemessene Entfernung dem Wert ohne durchlaufendes flaches Produkt, so wird eine Fehlzufuhr angezeigt.

Zur Durchführung dieses Verfahrens sind die von der Pulserzeugungseinrichtung erzeugten Impulse an die Bewegung des ersten Elements 52 der Vorrichtung angepaßt. Im Rahmen eines Lernvorgangs der Pulserzeugungseinrichtung wird daher innerhalb des Sammelzyklusses ein Indeximpuls festgelegt. Der Lernvorgang beinhaltet auch die exakte Positionierung der ortsfesten Markierung 43 und das Speichern dieser Position für jede Aufnahmevorrichtung 13. Während dieses Speichervorgangs wird in einem vorgegebenen Abstand, bevor die ortsfeste Markierung den jeweiligen Annäherungsschalter erreicht, ein virtueller Indeximpuls geschaffen, der von der Pulserzeugungseinrichtung an die Kontrolleinheit 64 übermittelt wird.

Nach Beendigung dieses Lernvorgangs ist die Vorrichtung betriebsbereit, so daß während des Zuführens flacher Produkte von einem Stapel zu den sich bewegenden Aufnahmeeinrichtungen einer Transportvorrichtung eine Dickenmessung erfolgen kann. Die Dickenmessung kann mittels eines einzelnen Annäherungsschalters 70 zur wie oben beschriebenen Erfassung der jeweiligen Markierung 42 und 43 erfolgen oder mittels zweier Annäherungsschalter 70 und 72 durchgeführt werden, wobei in letzerem Fall die Annäherungsschalter 70 und 72 zur Erfassung jeweils nur einer der Markierungen (42, 43) vorgesehen sind. Der Meßvorgang wird im folgenden mit Bezug auf Fig. 6 näher erläutert. Wenn die Pulserzeugungseinrichtung die erlernte virtuelle Indexposition passiert, beginnt der Meßzyklus und der Meßzähler wird zurückgesetzt. Ein Aufnahmeeinrichtungs-Zähler wird in Betrieb gesetzt und die Nummer der aktuellen Aufnahmeeinrichtung wird angezeigt. Sobald die Aufnahmeeinrichtung mit der Nummer 1 den Annäherungsschalter 70 passiert, wird der Aufnahmeeinrichtungs-Zähler zurück auf eins gesetzt.

Sobald die Vorderkante der ortsfesten Markierung 43 den zweiten Annäherungsschalter 72 passiert, werden die von der Pulserzeugungseinrichtung 62 erzeugten Impulse dem Meßzähler der Dickenkontrolleinheit 64 übermittelt. Sobald die Vorderkante der bewegbaren Markierung 42 den ersten Annäherungsschalter 70 passiert, wird der Zählvorgang abgebrochen. Durch die Erfassung der Vorderkante der Markierungen 42, 43 wird die schnellstmögliche Signalverarbeitung gewährleistet.

Die Anzahl der gemessenen Impulse wird daraufhin mit einer zuvor gespeicherten, der korrekten Zufuhr eines flachen Produkts entsprechenden Impulszahl bzw. einem Toleranzbereich verglichen. Dieser gespeicherte Wert kann aus einer Tabelle entnommen werden, in der dieser spezifische Tabelleneintrag für die betreffende Aufnahmeeinheit 13 gültig ist. Der Vergleich kann z. B. durch Subtraktion des gemessenen Wertes von dem gespeicherten Wert erfolgen. Übersteigt das Ergebnis einen bestimmten, auf dem während des Lernvorgangs ermittelten Toleranzbereich basierenden Schwellenwert, so wird entweder eine korrekte Zufuhr, eine Fehlzufuhr oder eine Doppelzufuhr festgestellt und z. B. auf einem LED angezeigt.

Die Dickenkontrolleinheit 64 kann ferner eine automatische Aktualisierungsvorrichtung zur Anpassung an variierende Signaturendicken oder ähnliche graduelle Veränderungen im Meßsystem umfassen. Dies könnte beispielsweise dadurch erfolgen, daß die gespeicherte Vergleichszahl oder der gespeicherte Toleranzwert der jeweiligen Aufnahmevorrichtung der tatsächlich gemessenen Impulsanzahl angepaßt wird. Dadurch wird jede Meßwert innerhalb des Toleranzbereichs in den während des Lernvorgangs ermittelten Durchschnittswert einbezogen, so daß eine neue Vergleichszahl oder ein neuer Toleranzwert berechnet und in der Tabelle gespeichert werden kann.

Das Meßsystem kann ferner Vorrichtungen umfassen, welche eine Fehlfunktion der Annäherungsschalter 70, 72 des in die Dickenkontrollvorrichtung 64 integrierten Aufnahmevorrichtungs-Zählers oder der Pulserzeugungseinrichtung 62 aufzeigen. Wenn zu Beginn des nachfolgenden Meßzyklusses nicht genau zwei Markierungen 42 und 43 erfaßt wurden, so wird für die betreffende Aufnahmeeinrichtung ein Annäherungsschalter-Fehler gemeldet. Dieser Fehlerstatus wird so lange aufrechterhalten, bis er von einem Maschinenbediener oder durch einen Softwarevorgang aufgehoben wird. Die Nummer der Aufnahmeeinheit, auf die sich der Annäherungsschalter-Fehler bezieht, kann in der Dickenkontrolleinheit 64 angezeigt werden.

Wie bereits beschrieben zählt die Dickenkontrolleinheit 64 die Anzahl der Aufnahmeeinrichtungen, indem sie zählt, wie oft die Pulserzeugungseinrichtung 62 den virtuellen Indexpuls passiert und dabei jedes Mal wieder auf eins gesetzt wird. Jedes Mal, wenn die Aufnahmeeinrichtung Nr. 1 erfaßt wird, wird die Anzahl der Pulserzeugungseinrichtungs-Umdrehungen mit der zuvor während des Lernzyklusses gespeicherten Anzahl der gezählten Aufnahmeeinrichtungen verglichen. Unterscheiden sich diese beiden Werte, so wird ein Aufnahmeeinrichtungs-Zählfehler gemeldet. Auf einem Display der Aufnahmeeinrichtungs-Kontrolleinheit kann angezeigt werden, wie viele Aufnahmeeinrichtung zu viel oder zu wenig gezählt wurden. Der Zählfehler-Status wird so lange aufrechterhalten, bis er von dem Maschinenbediener oder durch einen Softwarevorgang aufgehoben wird.

Ferner kann eine permanente Überwachung der Anzahl der gezählten Impulse von virtueller Indexposition zu virtueller Indexposition durchgeführt werden. Stimmt dieser Wert nicht mit einem vorgegebenen Wert, z. B. 4000, überein, so kann ein Pulserzeugungseinrichtungsfehler vorliegen. In diesem Fall könnte z. B. ein Warnsignal erzeugt werden, das einen Pulserzeugungseinrichtungsfehler anzeigt.

### LISTE DER BEZUGSZEICHEN

- 10: Zusammentrageinrichtung
- 12: Tasche
- 13: Aufnahmeeinrichtungen
- 14: Kettenräder
- 16: Hauptrahmen
- 18: Zuführstationen
- 20: flaches Produkt
- 21: flaches Produkt
- 22: Zuführeinrichtung
- 24: erste Walze
- 26: erste Achse
- 28: zweite Walze
- 30: zweite Achse
- 32: Hebelarm
- 34: Achse
- 42: Markierung
- 43: Markierung
- 52: bewegbare erste Elemente
- 54: zweites Element
- 62: Pulserzeugungseinrichtung
- 64: Auswertungseinheit
- 70: Annäherungsschalter
- 72: Annäherungsschalter
- A: Bewegungsrichtung
- d: Dicke
- z: Dicke

## Patentansprüche

1. Vorrichtung zur Dickenmessung flacher Produkte mit einer ersten und einer zweiten auf einer in einer Transportrichtung bewegbaren Transportvorrichtung (10) angeordneten Walze (24, 28), welche einen Walzenspalt bilden, durch den die flachen Produkte (20, 21 ) geführt werden, wobei die erste Walze (24) seitens der den Walzenspalt passierenden flachen Produkte (20, 21) auslenkbar ist,
**gekennzeichnet durch**
eine erste Markierung (42) an der auslenkbaren Walze (24), eine ortsfest an der Transportvorrichtung (10) an gebrachte, bezüglich der Transportrichtung von der ersten Markierung (42) beabstandete zweite Markierung (43) und einen zum Detektieren der ersten und der zweiten Markierung vorgesehenen, zu der Transportvorrichtung (10) ortsfest beabstandet angeordneten Annäherungsschalter (70).

2. Vorrichtung nach Anspruch 1,
**gekennzeichnet durch**
eine an den Annäherungsschalter (70) gekoppelte Kontrolleinheit (64), welche von dem Annäherungsschalter (70) Signale empfängt, wenn dieser eine jeweilige der Markierungen (42, 43) detektiert, und eine an die Kontrolleinheit (64) gekoppelte Pulserzeugungseinrichtung (62).

3. Vorrichtung zur Dickenmessung flacher Produkte mit einer ersten und einer zweiten auf einer in einer Transportrichtung bewegbaren Transportvorrichtung (10) angeordneten Walze (24, 28), welche einen Walzenspalt bilden, durch den die flachen Produkte (20, 21) geführt werden, wobei die erste Walze (24) seitens der den Walzenspalt passierenden flachen Produkte (20, 21) auslenkbar ist,
**gekennzeichnet durch**
eine erste Markierung (42) an der auslenkbaren Walze (24), eine ortsfest an der Transportvorrichtung (10) angebrachte, bezüglich der Transportrichtung von der ersten Markierung (42) beabstandete zweite Markierung (43), einen zu der Transportvorrichtung (10) ortsfest beabstandet angeordneten ersten Annäherungsschalter (70) zum Detektieren der ersten Markierung (42) und einen zu der Transportvorrichtung (10) ortsfest beabstandet angeordneten zweiten Annäherungsschalter (72) zum Detektieren der zweiten Markierung (43).

4. Vorrichtung nach Anspruch 3,
**gekennzeichnet durch**
eine Kontrolleinheit (64), welche an den ersten und den zweiten Annäherungschalter (70, 72) gekoppelt ist und von diesen Signale empfängt, wenn diese eine jeweilige der Markierungen (42, 43) detektieren, und eine an die Kontrolleinheit (64) gekoppelte Pulserzeugungseinrichtung (62).

5. Vorrichtung nach einem der Ansprüche 1 bis 4,
**dadurch gekennzeichnet,**
**dass** die Transportvorrichtung (10) Taschen (12) zur Aufnahme der flachen Produkte (20, 21) umfasst.

## Claims

1. An apparatus for measuring the thickness of flat products, having a first and a second roller (24, 28) arranged on a transport apparatus (10) that is movable in a transport direction, which rollers form a roller nip through which the flat products (20, 21) are guided, the first roller (24) being deflectable by the flat products (20, 21 ) passing through the roller nip,
**characterized by** a first mark (42) on the deflectable roller (24); a second mark (43), mounted in stationary fashion on the transport apparatus (10) and spaced away from the first mark (42) in terms of the transport direction; and a proximity switch (70), provided in order to detect the first and the second mark and arranged in stationary fashion and spaced away with respect to the transport apparatus (10).

2. The apparatus as defined in Claim 1, **characterized by** a monitoring unit (64), coupled to the proximity switch (70), that receives signals from the proximity switch (70) when the latter detects a respective one of the marks (42, 43); and by a pulse generation device (62) coupled to the monitoring unit (64).

3. An apparatus for measuring the thickness of flat products, having a first and a second roller (24, 28) arranged on a transport apparatus (10) that is movable in a transport direction, which rollers form a roller nip through which the flat products (20, 21) are guided, the first roller (24) being deflectable by the flat products (20, 21) passing through the roller nip,
**characterized by** a first mark (42) on the deflectable roller (24); a second mark (43), mounted in stationary fashion on the transport apparatus (10) and spaced away from the first mark (42) in terms of the transport direction; a proximity switch (70), arranged in stationary fashion and spaced away with respect to the transport apparatus (10), for detecting the first mark (42); and a second proximity switch (72), arranged in stationary fashion and spaced away with respect to the transport apparatus (10), for detecting the second mark (43).

4. The apparatus as defined in Claim 3, **characterized by** a monitoring unit (64) that is coupled to the first and to the second proximity switch (70, 72) and receives signals from the latter when they detect a respective one of the marks (42, 43); and by a pulse generation device (62) coupled to the monitoring unit (64).

5. The apparatus as defined in any of Claims 1 through 4, wherein the transport apparatus (10) encompasses pockets (12) for receiving the flat products (20, 21).

## Revendications

1. Dispositif pour mesurer l'épaisseur de produits plats comprenant un premier et un second cylindres (24, 28) disposés sur un dispositif de transport (10) pouvant être déplacé dans une direction de transport, qui forment une fente de cylindre, par laquelle les produits (20, 21) plats sont guidés, le premier cylindre (24) pouvant être dévié du côté des produits (20, 21) plats passant dans la fente de cylindre, **caractérisé par** un premier repère (42) sur le cylindre (24) pouvant être dévié, un second repère (43) placé de façon fixe sur le dispositif de transport (10) et espacé par rapport au sens de transport du premier repère (42) et un détecteur de proximité (70) prévu pour la détection des premier et second repères, disposé et espacé de façon fixe par rapport au dispositif de transport (10).

2. Dispositif selon la revendication 1, **caractérisé par** une unité de contrôle (64) couplée au détecteur de proximité (70), qui reçoit des signaux du détecteur de proximité (70) lorsque celui-ci détecte l'un des repères (42, 43), et un dispositif de génération d'impulsions (62) couplé à l'unité de contrôle (64).

3. Dispositif pour mesurer l'épaisseur de produits plats comprenant un premier et un second cylindres (24, 28) disposés sur un dispositif de transport (10) pouvant être déplacé dans une direction de transport, qui forment une fente de cylindre, par laquelle les produits (20, 21) plats sont guidés, le premier cylindre (24) pouvant être dévié du côté des produits (20, 21) plats passant dans la fente de cylindre, **caractérisé par** un premier repère (42) sur le cylindre (24) pouvant être dévié, un second repère (43) placé de façon fixe sur le dispositif de transport (10) et espacé par rapport au sens de transport du premier repère (42), un premier détecteur de proximité (70) disposé et espacé de façon fixe par rapport au dispositif de transport (10) pour la détection du premier repère (42) et un second détecteur de proximité (72) disposé et espacé de façon fixe du dispositif de transport (10) pour la détection du second repère (43).

4. Dispositif selon la revendication 3, **caractérisé par** une unité de contrôle (64) qui est couplée aux premier et au second détecteurs de proximité (70, 72) et reçoit des signaux de ces détecteurs lorsque ceux-ci détectent l'un des repères (42, 43), et un dispositif de génération d'impulsions (62) couplé à l'unité de contrôle (64).

5. Dispositif selon l'une quelconque des revendications 1 à 4, **caractérisé en ce que** le dispositif de transport (10) comprend des poches (12) pour le logement des produits plats (20, 21).
